**Europäisches Patentamt**

**European Patent Office**

**Office européen des brevets**

(19)

(11) **EP 1 489 722 A1**

(12) **EUROPÄISCHE PATENTANMELDUNG**

(43) Veröffentlichungstag:
**22.12.2004 Patentblatt 2004/52**

(51) Int Cl.⁷: **H02K 3/20**, H02K 11/00

(21) Anmeldenummer: **04013864.6**

(22) Anmeldetag: **14.06.2004**

| (84) Benannte Vertragsstaaten:<br>**AT BE BG CH CY CZ DE DK EE ES FI FR GB GR HU IE IT LI LU MC NL PL PT RO SE SI SK TR**<br>Benannte Erstreckungsstaaten:<br>**AL HR LT LV MK** | (71) Anmelder: **Imris, Pavel Dr.**<br>**17268 Boitzenburger Land (DE)** |
|---|---|
| (30) Priorität: **17.06.2003 DE 10327221** | (72) Erfinder: **Imris, Pavel Dr.**<br>**17268 Boitzenburger Land (DE)** |

(54) **Elektromotor**

(57) Die Erfindung betrifft einen Elektromotor, bestehend aus einem Stator mit einer Mehrzahl von Magnetpolen und Wicklungen (6) und aus einem Rotor mit einer Mehrzahl von Magnetpolen und Wicklungen (7).

Nach der Erfindung ist ein solcher Elektromotor derart ausgebildet, daß am Stator parallel zur Welle (3) des Rotors mindestens ein mit mehreren Polen (S/N) versehenes erstes Magnetkernsegment (2) aus weichmagnetischem Material und am Rotor ebenfalls parallel zur Welle (3) des Rotors mindenstens ein mit mehreren Polen N/S versehenes zweites Magnetkernsegment angeordnet ist, wobei sowohl die Pole (S/N) des Stators als auch die Pole (N/S des Rotors mit jeweils mindestens einer Wicklung (6 bzw. 7) bestückt und diese Wicklungen (6,7) als Bandkondensatoren ausgebildet sind.

FIG.2

EP 1 489 722 A1

**Beschreibung**

Die Erfindung betrifft einen Elektromotor gemäß Oberbegriff des Patentanspruches 1.

Derartige Elektromotoren sind hinlänglich bekannt und in den unterschiedlichsten Ausführungsformen in Benutzung.

Seit der Erfindung des Wechselstrom-Asynchronmotors und des Drehstrommotors gibt es seit langem robuste Antriebsaggregate , die in allen Bereichen der globalen Wirtschaft eingesetzt werden. Das Verhältnis der abgegebenen mechanischen zur aufgenommenen elektrischen Leistung liegt bei großen Elektromotoren über 90%. Kleinmotoren, insbesondere Gleichstrommotoren, haben dabei einen Wirkungsgrad in der Größenordnung von ca. 80%.

Gleichstrommotoren haben ein breites Anwendungsspektrum, z. B. in der Automobilindustrie oder in der Videotechnik, bei der Datenverarbeitung, in Verkaufsautomaten und meistens sind sie in spezielle Betriebsgruppen integriert.

Es gehört zum Stand der Technik, daß die bekannten mittels Wechselstrom betriebenen Elektromotoren von der Netzfrequenz abhängig sind. Synchronmotoren besitzen einen mit Gleichstrom magnetisierten Polrad-Rotor und kleinere Motoren haben ebenfalls permanentmagnetische Pole. Durch die Netzfrequenz f und die Polpaaranzahl p des Motors ist die Drehfrequenz n gegeben:

$$n = \frac{f}{p} \qquad\qquad [1]$$

Bei Belastung des Synchronmotors ändert sich der Winkel zwischen der Achse des Drehfeldes und der magnetischen Achse des Rotors und der Synchronismus zwischen Drehfeld und Rotor wird aufgehoben. Die Maschine entwickelt kein Drehmoment mehr und bleibt stehen. Das ist ein enormer Nachteil des Synchronmotors. Asynchronmotoren sind wegen ihrer Einfachheit die am häufigsten eingesetzten Elektromotoren. Sie benötigen zur Erzeugung des Drehmomentes einen geringen Unterschied zwischen Drehfeld und Rotor-Drehfrequenz. Der Stator ist ebenso aufgebaut wie bei dem Synchronmotor. Der Rotor trägt eine über Schleifringe kurzgeschlossene Drehstromwicklung aus Kupferdraht oder Kupferstäben, die an den Enden mittels zwei Kurzschlußringen verbunden sind. Durch die Induktion zwischen Rotor und Stator wird in den Stäben Wechselstrom induziert. Das Drehmoment ergibt sich aus dem Zusammenwirken dieses Stromes mit dem Drehfeld. Die Drehmoment-Drehzahl-Kennlinie zeigt, daß diese Elektromotoren kurzzeitig bis zum Kippmoment überlastet werden können. Bei höherer Belastung bleiben sie jedoch stehen. Als wirtschaftlicher Nachteil des Asynchronmotors erweist sich der relativ niedrige Wirkungsgrad.

Es gibt weitere unzählige Bauarten und Bauformen des Elektromotors, die in den verschiedensten Anwendungsbreichen der globalen Wirtschaft eingesetzt werden. Es ist der bekannte Linearmotor, der letztlich breite Anwendung in der Wirtschaft gefunden hat. Bekannt wurden bisher vor allem der lineare Asynchronmotor - der Wanderfeldmotor, dessen Läufer und Ständer auch geschnitten, in die Ebene abgewickelt und in geringem Abstand parallel und gegenüber beweglich angeordnet ist. Linearmotoren werden hauptsächlich in Werkzeugmaschinen für Positionierungs- und für Schnell-Magnetlinienbahren verwendet. Mehrere sogenannte Schrittmotoren sind mit elektronischen Steuergeräten, wie dem pulsbreitenmodulierten Servoregler, ausgerüstet und werden mit einer Stromfrequenz bis 500 Hz und bei einer Taktfrequenz bis 10 kHz gesteuert. Das sind meistens kleine Motoren, die mit abgegebener Leistung bis 5 KW in der neuen Technologie eingesetzt werden. Der Wirkungsgrad jener Motoren ist sehr niedrig.

Gemäß dem Stand der Technik sind alle Elektromotoren mit bekannten Drahtwicklungen oder Drahtspulen ausgerüstet, die am Magnetkern aus Dynamoblech angeordnet sind. Das Drehmoment hängt von der Windungszahl und dem Strom durch die Spule ab. Alle großen Elektromotoren sind an Netzfrequenz von 50 Hz bis 60 Hz gebunden. Für die Wechselspannung entsteht in den Drahtwicklungen ein beträchtlicher induktiver Widerstand $X_L$ , der mit Gleichung [2] definiert ist:

$$X_L = 2\pi \cdot f \cdot L \qquad\qquad [2]$$

wo

    $\pi$ = Ludolfsche Zahl
    f = Frequenz
    L = Induktivität

Bei hoher Frequenz kann dieser Widerstand einer Spule, der auch blinder Widerstand genannt wird, den Strom vollkommen abriegeln. Das ist der Hauptgrund, warum bekannte Elektromotoren nur mit niedriger Stromfrequenz betrieben werden. Auch bei einer Frequenz von 50 Hz ist der induktive Widerstand hoch und hindert den Strom in den Wicklungen. Gerade das ist die Stromstärke, die den Magnetfluß im gesamten Magnetkreis des Motors bestimmt. Die Windungszahl multipliziert mit den Strom-Amperewindungen definiert den Magnetfluß in dem Spalt zwischen Rotor und Stator. Aus diesem physikalischen Grunde wirkt der induktive Widerstand negativ gegen die Leistung aller zum Stand der Technik gehörenden Motoren. Alle Elektromotoren gemäß dem Stand der Technik haben mehrere Nachteile, die oben bereits erwähnt wurden.

Der Erfindung liegt die Aufgabe zugrunde, einen Elektromotor zu schaffen, dessen induktiver Widerstand niedrig und dessen kapazitiver Widerstand groß ist, dessen Wirkungsgrad hoch ist und der mit einer breiten Stromfrequenz betreibbar ist, und zwar bei allen Motorbauarten.

Diese Aufgabe ist mit einem Elektromotor der eingangs geannten Art nach der Erfindung durch die im Kennzeichen des unabhängigen Patentanspruches angeführten Merkmale gelöst. Vorteilhafte Weiterbildungen ergeben sich nach den abhängigen Patentansprüchen.

Mit einem solchen erfindungsgemäßen E-Motor wird , abgesehen davon, däß dessen Drehmoment und Drehzahl in einem breiten Bereich präzise steuerbar sind, dank des erreichbar höheren Wirkungsgrades letztlich umweltschonend weniger Primärenergie in Anspruch genommen.

Der erfindungsgemäße E-Motor kann mit Mittelfrequenz- bis Hochfrequenz-Wechselstrom oder mit pulsierendem Gleichstrom betrieben werden.

Der erfindungsgemäße Elektromotor wird nachfolgend anhand der zeichnerischen Darstellung von Ausführungsbeispielen näher erläutert.

Es zeigt schematisch

Fig. 1     einem Querschnitt durch den Elektromotor mit Rotor und Stator und dem Gehäuse.

Fig. 2     zum Teil in Seitenansicht und zum Teil im Schnitt das Konstruktionsprinzip des Elektromotors.

Fig. 3     im Querschnitt ein Kondensatorband gemäß der DE-OS 199 27 355 A1.

Fig. 4     in Seitenansicht zwei Magnetkernsegmente aus Tranformatorblech mit Windungen und elektrischem Schaltkreis von Stator und Rotor.

Fig. 5     in Seitenansicht eine C-Scheibenkondensatorwindung mit Magnetkern.

Fig. 6     im Querschnitt zwei C-Scheibenkondensatorwindungen mit Magnetkern.

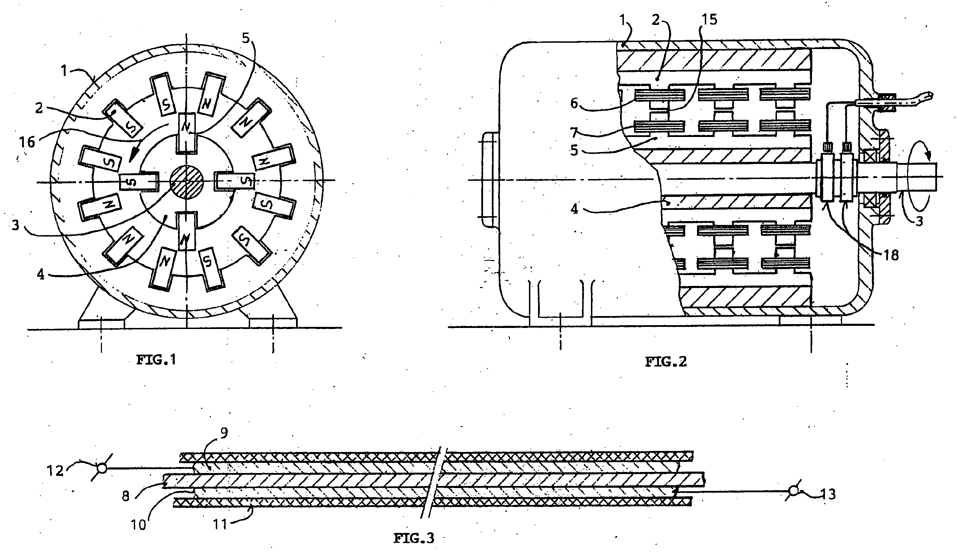

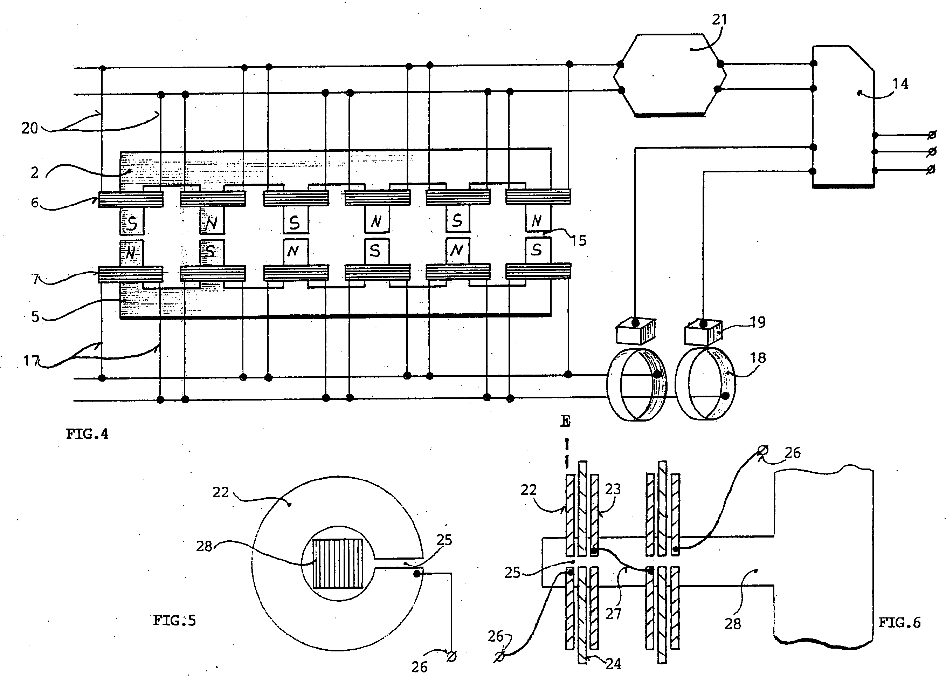

Das Grundprinzip des hier beschriebenen Elektromotors ist in Fig. 1 und Fig. 2 dargestellt. Das Beispiel in Fig. 1 zeigt, der Stator setzt sich aus dem vorteilhafterweise nicht aus magnetischen Material bestehenden Gehäuse 1 und einer Mehrzahl von Magnetkernsegmenten 2 zusammen, die in den Nuten am Gehäuse angeordnet sind. Der Rotor besteht aus Welle 3 und Walze 4 aus nichtmagnetischem Material. In den Nuten von Walze 4 sind Magnetkernsegmente 5 hineingepreßt und befestigt. Die Magnetkernsegmente 2 und 5 werden aus Transformatorblech gestanzt und dann zu einem Segment zusammengepreßt. Fig. 4 zeigt in Seitenansicht die Segmente 2 und 5, die aus einer Mehrzahl von Magnetpolen S/N bestehen, die sich in der Praxis als Blechstapel darstellen.Die Magnetpole 2 am Stator sind mit als Bandkondensatoren ausgebildeten Wicklungen 6 versehen und die Magnetpole 5 des Rotors mit entsprechend ausgebildeten Wicklungen 7. Bezgl. eines solchen Bandkondensators wird auf die DE-A-199 27 355 A1 verwiesen und hierzu auf Fig.3.

Das Kondensatorband in Fig. 3 besteht aus Dielektrikum 8, Metallfolien 9 und 10 und Isolator 11. Mittels Anschluß 12 ist Metallfolie 9 und mittels Anschluß 13 ist Metallfolie 10 am Hochfrequenzgenerator 14 angeschlossen. Fig. 4 zeigt nur ein Magnetkernsegment 2, das am Stator befestigt ist und alle Wicklungen 6 sind über Anschlüsse 20 am Wechselstromgenerator 14 angeschlossen. Magnetkernsegment 5 ist am Rotor befestigt und alle Wicklungen 7 sind mittels Anschlüsse 17 am Wechselstromgenerator 14 angeschlossen.

Der hier beschriebene Elektromotor besitzt ein feststehendes Magnetsystem - Stator, der aus einer Mehrzahl von Magnetkernsegmenten 2 besteht und einem drehbaren Rotor, der ebenso aus einer Mehrzahl von Magnetkernsegmenten 5 besteht, von dessen Motorwelle 3 das Drehmoment an die Arbeitsmaschine übertragen wird. Fig. 1, 2 und 3 zeigen, daß die Bauform des hier ausgeführten Elektromotors eine ganz andere Struktur aufweist als alle Elektromotoren gemäß dem Stand der Technik. Die Wechselwirkung zwischen den Magnetfeldern von Stator und Rotor sind gemäß der physikalischen Grundlage bei dem hier beschriebenen Elektromotor ganz anders definiert als die Wechselwirkungen bei allen bekannten Elektromotoren. Fig. 1, 2 und 4 lassen erkennen, daß der magnetische Fluß nur durch die Magnetkernsegmente 2 und 5 und weiter durch den Spalt 15 zwischen Rotor und Stator geschlossen ist.

Die Verteilung der Magnetkernpole S-N am Stator und am Rotor ist so gestaltet, daß die Rotor-Drehfrequenz total von der Stromfrequenz unabhängig ist. Dies bedeutet, daß die mathematische Gleichung [1] für den hier beschriebenen Elektromotor keine Gültigkeit hat.

Beim Laden und Entladen eines Kondensators fließt elektrischer Strom. Der hier beschriebene Elektromotor wird mit einem solchen Strom betrieben, weil alle Wicklungen 6 und 7 im physikalischen Prinzip elektrische Kondensatoren sind. Durch Wicklungen 6 und 7 fließt Wechselstrom, der hauptsächlich vom kapazitiven Widerstand $X_L$ abhängig ist

$$X_L = \frac{1}{2\pi \cdot f \cdot C} \qquad\qquad [3]$$

Die Symbole in Gleichung [3], mit Ausnahme von Kapazität C, sind dieselben wie in Gleichung [2]. Gleichung [4] zeigt, daß der Strom I von der Kapazität C des Bandkondensators und der Frequenz f der Spannung V abhängig ist

$$I = V(2\ \pi \cdot f \cdot c) \qquad\qquad [4]$$

In Tabelle 1 sind numerische Daten des Bandkondenstorstromes A bei verschiedener Kapazität C und bei verschiedenen Frequenzen Hz der schwingenden Wechselspannung aufgeführt, die in diesem Beispiel 220 V beträgt. Den hier beschriebenen Elektromotor kann man bei allen Stromfrequenzen betreiben. Nur die Qualität des Materials der Magnetkernsegmente 2 und 5 kann die obere Grenze der Stromfrequenz begrenzen. Gemeint sind die Wirbelströme und die Permeabilität des Materials.

Um die Funktion des hier beschriebenen Elektromotors zu erklären, ist ein einfaches Beispiel ausgewählt, das in Fig. 1, 2 und 4 dargestellt ist. Am Rotor in Fig. 1 sind vier Magnetkernsegmente 5 angeordnet, d.h., der Rotor hat vier Pole. Am Stator sind zwölf Magnetkernsegmente 2 angeordnet, d.h., der Stator hat zwölf Pole. Die Drehrichtung des Rotors ist mit Pfeil 16 gekennzeichnet. Die Verteilung der Magnetpole S-N am Rotor und am Stator zeigt ein Momentbild, das genau eine halbe Periode des Wechselstromes dauert. Zum Beispiel bei einer Stromfrequenz von 50 Hz beträgt diese Zeit 0,01 Sek. In diesem Beispiel ist der Rotor blockiert und bleibt stehen. Es ist eine Rotorposition, in der man das Anzugsmoment messen kann. Das Anzugsmoment wirkt in Pfeilrichtung, die mit dem Symbol 16 gekennzeichnet ist. In der zweiten halben Periode des Wechselstromes wechseln alle Magnetpole S-N im gesamten Elektromotor ihre Polarität zu N-S. Das Anzugsmoment in der zweiten halben Periode wirkt genauso wie in der ersten halben Periode. Man kann den Rotor in der in Fig. 1 gezeigten Position stundenlang stehenlassen, das Anzugsmoment wirkt unverändert weiter und das ohne jegliche Gefahr, daß die Wicklungen 6, 7 durch Kurzschluß vernichtet werden. Durch Wicklungen 6, 7 aus Bandkondensator strömt elektrischer Wechselstrom gemäß Gleichung [4] und das unabhängig davon, ob der Rotor blockiert ist oder sich dreht, sich langsam dreht oder sich mit großer Drehzahl dreht. Gerade das ist die physikalische Grundlage des neustrukturierten Motors, welche es erlaubt, die Drehzahl des Rotors unabhängig von der Stromfrequenz zu kontrollieren. Wenn sich der Rotor mit gewünschter Drehzahl drehen soll, muß man in dem Beispiel in Fig. 1 zunächst die Blockierung des Rotors abkoppeln. Danach dreht sich der Rotor in maximaler magnetischer Flußstellung, d.h., die Magnetpole am Stator and am Rotor müssen eine magnetische Achse N-S, S-N erreichen. Ohne weiteres Geschehen wird der Rotor in dieser magnetischen Achse stehenbleiben, aber der Wechselstrom wird weiter durch die Wicklungen 6, 7 strömen. In dieser Position ist das Anzugsmoment Null. Der Schaltkreis in Fig. 4 zeigt, wie man das Drehen des Rotors weiterbetreiben und kontrollieren kann. Fig. 4 veranschaulicht ein Magnetkernsegment 2 am Stator sowie ein Magnetkernsegment 5 am Rotor. Die Verteilung der Magnetpole in der ersten halben Periode ist mit dem Symbol S-N gekennzeichnet. Die elektrischen Anschlüsse 17 am Rotor zeigen die Verbindung zwischen den Wicklungen 7 und Schleifringen 18 des Kommutators. Mittels Kontaktbürsten 19 sind die Wicklungen 7 direkt am Wechselstromgenerator 14 angeschlossen. Ein ähnlicher elektrischer Schaltkreis läßt erkennen, daß die Wicklungen 6 an den Magnetkernsegmenten 2 des Stators über Anschlüsse 20 ebenso am Wechselstromgenerator 14 angeschlossen sind. Zwischen Wicklungen 6 und Wechselstromgenerator 14 ist Drehzahl-Steuergerät 21 geschaltet, dessen Funktion es ist, das Magnetkernsystem des Stators so umlaufend zu steuern, daß der Winkel zwischen der Achse des Drehfeldes und der magnetischen Achse des Rotors immer vorhanden ist. Das elektronische Drehzahl-Steuergerät 21 ist durch einen bekannten optischen Sensor mit dem Rotor verbunden, wodurch die präzise Rotorposition für die elektronische Datenverarbeitung geliefert wird.

Die oben ausgeführte gesamte physikalische Grundlage gemäß der Neuerung zeigt, daß die Drehzahl des Rotors mit einer großen Präzision im Bereich von ± 0,3% einstellbar ist. Eine derartige Präzision der Nenndrehzahl ist deshalb möglich, weil das Drehmoment im Bereich von Millisekunden steuerbar ist und zwar durch Zufuhr/Drosseln von elektrischer Energie. Man steuert/ drosselt die Zufuhr durch eine Änderung der Stromfrequenz und/oder durch eine Änderung der Amplitude des Wechselstromes. Das ist technisch leicht machbar, weil die Wicklungen 6, 7 im physikalischen Sinne jeweils ein elektrischer Kondensator sind. Die bekannte Drehmoment-Drehzahl-Kennlinie verläuft bei Elektromotoren gemäß der Erfindung ganz anders als bei allen zum Stand der Technik gehörenden Elektromotoren.

Es ist wirtschaftlich von Wichtigkeit, daß der Elektromotor gemäß der Neuerung mit einem größeren kapazitiven Widerstand als dem induktiven Widerstand betrieben wird. Gleichung [5] veranschaulicht dieses Verhältnis:

$$\frac{1}{2\pi \cdot f \cdot C} > 2\pi \cdot f \cdot L \qquad\qquad [5]$$

Es ist bekannt, daß die Leistung aller elektrischer Maschinen dem magnetischen Fluß direkt proportional ist. Ferner ist der magnetische Fluß der Ampèrewindung direkt proportional. Im praktischen Sinne regelt man diese Abhängigkeit mit der Windungszahl in Wicklungen 6, 7 sowie mit der Stromstärke. Um der Definition in Gleichung [5] nachzukommen, ist es besser, wenn Wicklungen 6, 7 eine geringe Windungszahl haben und mit einer großen Stromstärke betrieben werden. Die Daten in Tabelle 1 und Gleichung [4] zeigen, daß die Stromstärke mit der Stromfrequenz und mit der Kapazität des Bandkondensators zunimmt. Ein Bandkondensator mit großer Kapazität hat für diese Aufgabe wichtige wirtschaftliche Vorteile.

Ein Bandkondensator mit einer besonders hohen Kapazität wird nach Fig. 5 und Fig. 6 geschaffen. Zwischen zwei Metallscheiben 22, 23 ist Dielektrikum 24 mit einer besonders hohen Dielektrizitätskonstante angeordnet. Die Metallscheiben 22, 23 haben eine C-förmige Geometrie, d.h., Luftspalt 25 ist aus der Scheibe ausgestanzt. So geschaffene elektrische Kondensatoren werden elektrisch in Serie geschaltet und mit niedriger Wechselspannung und großer Stromstärke betrieben. Fig. 6 zeigt, über Anschlüsse 26 sind die Kondensatoren am Wechselstromgenerator 14 angeschlossen und mittels Anschluß 27 in Serie geschaltet. Ein so gebildeter Bandkondensator wird an jedem Magnetpol 28 angeordnet und für den Betrieb des hier beschriebenen Elektromotors benutzt.

Das Beispiel in Fig. 1 zeigt, daß der Rotor mit vier Polen und der Stator mit zwölf Polen ausgebildet ist, d.h., das Verhältnis zwischen Rotorpolzahl und Statorpolzahl ist 1:3. Auch ein anderes Rotorpolzahl-Verhältnis ist möglich- nicht nur für den einphasigen Motor, aber auch für mehrphasige Motoren.

Gemäß der Neuerung wird der Elektromotor in verschiedenen Bauarten und Bauformen ausgebildet. Die technischen Daten haben ihren Ursprung in der obenbeschriebenen physikalischen Grundlage. Ein bürstenloser Motor, dessen Rotor mit Permanentmagneten versehen ist, wird mit monopolaren Hochfrequenzimpulsen betrieben. Ein solcher Motor findet in mehreren Bereichen der Wirtschaft Anwendung.

Ferner ist ein Elektromotor, dessen Rotorpole nur aus weichmagnetischem Material und ohne Wicklungen 5 ausgebildet sind, mit Steuergerät 21 ausgerüstet, das nur die magnetische Anziehungskraft zwischen Rotor und Stator regelt. Zu dieser Bauformart gehört auch der bürstenlose Elektromotor. Eine weitere Bauart ist ein Elektromotor, der nach dem Prinzip "gleichartige Magnetpole stoßen sich ab" betrieben wird. Bei einem solchen Motor steuert das Steuergerät 21 den Wechselstrom und das Drehfeld im Stator so, daß nur gleichartige Magnetpole N-N, S-S im Bereich hinter den Polen und gegeneinander wirken. Für eine solche Bauart sind eine Steuerelektronik und eine Positions-Sensorik sehr wichtige Zusatzgeräte. Man kann eine ganze Serie von Linearmotoren und Schrittmotoren für spezielle Positionierungsaufgaben ganz leicht entwickeln. Die Rotationsbewegung oder Linearbewegung des Schrittmotors wird dann mit schnell hintereinanderlaufenden Schritten in gewünschter Position eingeführt.

In Kennliniendarstellungen werden die Drehzahl, der elektrische Energieverbrauch, der Wirkungsgrad und/ oder die Abgabeleistung als Funktion des Drehmoments allgemein gezeigt. Der Elektromotor gemäß der Erfindung weist in diesem Bereich große Vorteile auf. An erster Stelle steht der enorm hohe Wirkungsgrad gegenüber allen zum Stand der Technik gehörenden Elektromotoren. Der hier beschriebene Elektromotor hat große Vorteile im Bereich Drehzahl-Drehmoment-schwingende Belastung-Kennlinie. Die Drehzahl des Rotors wird mittels elektronischer Steuerung in Millisekundenzeit durch Energiezufuhr gesteuert und mit einer Präzision von $\pm$ 0,3% gehalten. Eine solche technische Eigenschaft haben die bekannten Elektromotoren nicht. Ferner ist der hier beschriebene Elektromotor in Havariesituationen unverwüstlich. Der Rotor kann im vollen Stillstand ruhen, wobei das Anzugsmoment erhalten bleibt und das ohne Kurzschlußgefahr. Ein solcher Zustand kann stundenlang dauern. Weitere wirtschaftliche Vorteile sind bei jeder Bauart des Elektromotors spezifisch zu beurteilen. Die vielfältigen Bauarten und Bauformen des Motors gemäß der Neuerung bieten dem Konstrukteur enorm große Auswahlkriterien, demzufolge dieser Elektomotor überall in der globalen Wirtschaft einsetzbar ist.

| C (µF) | 50 Hz (A) | 60 Hz (A) | 100 Hz (A) | 300 Hz (A) | 500 Hz (A) | 1.000 Hz (A) | 3.000 Hz (A) | 5.000 Hz (A) | 10.000 Hz (A) |
|---|---|---|---|---|---|---|---|---|---|
| 4,5 | 0,31 | 0,37 | 0,62 | 1,86 | 3,11 | 6,22 | 18,66 | 31,10 | 62,20 |
| 10 | 0,69 | 0,82 | 1,38 | 4,14 | 6,91 | 13,82 | 41,47 | 69,11 | 138,23 |
| 50 | 3,45 | 4,14 | 6,91 | 20,73 | 34,55 | 69,11 | 207,34 | 345,57 | 691,15 |
| 100 | 6,91 | 8,29 | 13,82 | 41,46 | 69,11 | 138,23 | 414,69 | 691,15 | 1.382,30 |
| 300 | 20,73 | 24,88 | 41,46 | 124,40 | 207,34 | 414,69 | 1.244,07 | 2.073,45 | 4.146,90 |
| 500 | 34,55 | 41,46 | 69,11 | 207,34 | 345,57 | 691,15 | 2.073,45 | 3.455,75 | 6.911,50 |
| 800 | 55,29 | 66,35 | 110,58 | 331,75 | 552,92 | 1.105,84 | 3.317,52 | 5.529,20 | 11.058,40 |
| 1.000 | 69,11 | 82,93 | 138,23 | 414,69 | 691,15 | 1.382,30 | 4.146,90 | 6.911,50 | 13.823,00 |

**TABELLE 1**

**Patentansprüche**

1. Elektromotor, bestehend aus einem Stator mit einer Mehrzahl von Magnetpolen und Wicklungen (6) und aus einem Rotor mit einer Mehrzahl von Magnetpolen und Wicklungen (7),

**dadurch gekennzeichnet,**

**daß** am Stator parallel zur Welle (3) des Rotors mindestens ein mit mehreren Polen (S/N) versehenes erstes Magnetkernsegment (2) aus weichmagnetischem Material und am Rotor ebenfalls parallel zur Welle (3) des Rotors mindenstens ein mit mehreren Polen N/S versehenes zweites Magnetkernsegment angeordnet ist, wobei sowohl die Pole (S/N) des Stators als auch die Pole (N/S des Rotors mit jeweils mindestens einer Wicklung (6 bzw. 7) bestückt und diese Wicklungen (6,7) als Bandkondensatoren ausgebildet sind.

2. Elektromotor nach Anspruch 1,
   **dadurch gekennzeichnet,**
   **daß** die die Wicklungen (6,7) bildenden Bandkondensatoren mit ihren Erstreckungsebenen (E) senkrecht zu den Polen (N/S;S/N) der Magnetkernsegmente (2,5) orientiert an diesen angeordnet sind.

3. Elektromotor nach Anspruch 1 oder 2,
   **dadurch gekennzeichnet,**
   **daß** die Bandkondensatoren jeweils aus zwei ringförmigen, durch eine Lücke (25) unterbrochenen Metallscheiben (22,23) gebildet sind und zwischen diesen Scheiben (22,23) ein Dielektrikum (24) angeordnet ist.

4. Elektromotor nach Anspruch 3,
   **dadurch gekennzeichnet,**
   **daß** auf jedem der Pole (N/S;S/N) mehrere untereinander verbundene Paare von Metalscheiben (22,23) angeordnet sind.

5. Elektromotor nach einem der Ansprüche 1 bis 4,
   **dadurch gekennzeichnet,**
   **daß** die als Bandkondensatoren ausgebildeten Wicklungen (6) am mindestens einen Magnetkernsegment (2) des Stators über elektrische Anschlüssen (20) mit einem Drehzahlsteuergerät (21) derart veränderlich verschlatet sind, daß die Polaritäten (S/N) am Magnetkernsegment (2) des Stators mit zeilichem Vorsprung vor den Polaritäten (N/S) am Magnetkernsegment (5) des Rotors positioniert sind.

6. Elektromotor nach einem der Ansprüche 1 bis 5,
   **dadurch gekennzeichnet,**
   **daß** die Pole am Magnetkernsegment (5) des Rotors als Permanentmagnete ausgebildet und die Wicklungen (6) am Magnetkernsegment (2) des Stators mit einem monopolaren Impulsgenerator(14) verschlatet sind.

FIG.1

FIG.2

FIG.3

EP 1 489 722 A1

8

FIG.4

FIG.5

FIG.6

E

EP 1 489 722 A1

**Europäisches Patentamt**

# EUROPÄISCHER RECHERCHENBERICHT

Nummer der Anmeldung

EP 04 01 3864

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | FR 1 453 957 A (BERNHARD KIRSCH) 22. Juli 1966 (1966-07-22) * Seite 3, Zeile 59 - Zeile 69 * * Seite 4, Zeile 38 - Zeile 47 * ----- | 1-6 | H02K3/20 H02K11/00 |
| Y | DE 199 27 355 A (IMRIS PAVEL) 21. Dezember 2000 (2000-12-21) * Seite 2, Zeile 29 - Zeile 63 * ----- | 1-5 | |
| Y | GB 547 668 A (STANLEY ISAIAH HITCHCOX) 7. September 1942 (1942-09-07) * Seite 4, Zeile 113 - Seite 5, Zeile 116 * ----- | 6 | |

**RECHERCHIERTE SACHGEBIETE (Int.Cl.7)**

H02K
H01F

Der vorliegende Recherchenbericht wurde für alle Patentansprüche erstellt

| Recherchenort | Abschlußdatum der Recherche | Prüfer |
|---|---|---|
| München | 27. September 2004 | Frapporti, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 04 01 3864

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-09-2004

| Im Recherchenbericht angeführtes Patentdokument | Datum der Veröffentlichung | Mitglied(er) der Patentfamilie | Datum der Veröffentlichung |
|---|---|---|---|
| FR 1453957 A | 22-07-1966 | KEINE | |
| DE 19927355 A | 21-12-2000 | DE 19927355 A1 | 21-12-2000 |
| GB 547668 A | 07-09-1942 | KEINE | |

EPO FORM P0461